# EUROPEAN PATENT SPECIFICATION

(11) **EP 2 268 713 B1**
(45) Date of publication and mention of the grant of the patent: **21.02.2018**
(21) Application number: 09733148.2
(22) Date of filing: 15.04.2009
(51) Int. Cl.: C08G 73/02

(54) **PROCESS FOR MAKING POLYAMINOPOLYPHENYL METHANES USING A MIXED SOLID ACID CATALYST SYSTEM**
VERFAHREN ZUR HERSTELLUNG VON POLYAMINOPOLYPHENYL-METHANEN MITHILFE EINES GEMISCHTEN FESTSTOFF-SÄURE-KATALYSATORSYSTEMS
PROCÉDÉ POUR LA PRODUCTION DE MÉTHANE À BASE DE POLYAMINOPOLYPHÉNYLE UTILISANT UN SYSTÈME CATALYSEUR D ACIDE SOLIDE MIXTE

(30) Priority: 16.04.2008 US 45409
(43) Date of publication of application: 05.01.2011
(73) Proprietor: Dow Global Technologies LLC, Midland, MI 48674 (US)
(72) Inventor: CHEN, Lao-Jer, Sugar Land TX 77479 (US); JIMENEZ, Jorge, Lake Jackson TX 77566 (US)
(74) Representative: Beck Greener
(86) International application number: PCT/US2009/040622
(87) International publication number: WO 2009/129286

(56) References cited:
- WO-A1-01/58847
- GB-A- 1 163 810
- US-A- 4 172 847
- ANAND, JAYASHREE ET AL: "Spectroscopic studies on poly(4,4'-methylenedianiline) salts and their bases" SYNTHETIC METALS, vol. 83, no. 2, 1996, pages 97-100, XP002532019 ISSN: 0379-6779
- RÖMPP ONLINE: [Online] February 2004 (2004-02), GEORG THIEME VERLAG , STUTTGART , XP002532020 Retrieved from the Internet: URL:http://www.roempp.com/prod/index1.html > [retrieved on 2009-06-15] Stichwort: Ionenasutauscher the whole document

## Description

This invention relates to processes to make polyaminopolyphenyl methanes. More particularly, it relates to a method to make polyaminopolyphenyl methanes using a novel mixed catalyst system.

Methylenedianiline (MDA), more commonly known as 4,4'-diaminodiphenylmethane, 4,4'-methylenedianiline, 4,4-methylenedianiline, or 4,4'-methylene bis(aniline), and mixtures of MDA and its higher homologues are extremely suitable starting materials from which diisocyanates and polymeric methylene-diphenyldisocyanate (PMDI). The isocyanates may be made from the MDA by various methods, such as by phosgenation. Such isocyanates are particularly useful for preparing polyurethanes. Aliphatic systems may also be obtained from MDA by means such as, for example, hydrogenation of the aromatic ring.

Of the many methods described in the literature for the production of MDA, manufacture from the condensation reaction of aniline with formalin is probably the most common because of process economics.. Depending on the MDA variant desired, the condensation product (known as "aminal") is formed first and then rearranged generally in the presence of, mineral acids such as HCl. Conventionally, the condensation itself may be performed in the presence of acids.

However, catalysis using mineral acids has certain disadvantages. First, salt-containing waste waters, resulting from the required neutralization of the acid, may accumulate. These waters create disposal challenges. Second, aqueous mineral acids frequently corrode equipment and pipelines.

Various methods for producing MDA have been proposed to overcome these problems. Such methods often avoid the use of liquid mineral acids by employing, instead, solid acids. For example, U.S. Pat. No. 4,172,847 discloses a method for the formation and separation of MDA wherein the aniline-formaldehde reaction is carried out in the presence of a silica-alumina cracking catalyst. Purification (crystallization) for increased 4,4'-MDA isomer is achieved by the use of halogenated solvents. This process unfortunately requires a complex additional process step, which requires additional material cycling and separating operations.

U.S. Pat. No. 4,011,278 reports on conversions of polar organic compounds using solid oxidic catalysts, particularly ZSM-5 and other zeolites. It mentions conversion of N-alkylaniline with formaldehyde in the presence of zeolitic catalysts.

DE-A-2 202 500 discloses a rearrangement of aminal using amorphous silicon-aluminum-mixed oxide cracking catalysts to produce high yields of 4,4'-isomers in the presence of ortho-isomers.

EP-A-0 264 744 describes the condensation of aniline with trioxan or free formaldehyde and the rearrangement to MDA bases using solid boron-containing zeolites. Simultaneous condensation and rearrangement, as well as isolation of aminobenzylanilines with subsequent rearrangement to MDA, are described as having high monomer selectivities. The reaction is preferably carried out using benzene as the solvent.

EP 000078 and DE 2736862 disclose the use of ion exchange resins based on divinylbenzene-crosslinked divinylbenzene-styrene copolymer sulfonated with one sulfonic acid group per aromatic ring, in a batch process to make MDA and PMDA.

DE 31425529 describes a process to prepare polyaromatic amines with minimized polynuclear compounds by carrying out the aminal process in the presence of ion exchangers bearing perfluoro-alkyl and sulfonic acid groups.

Additional art illustrates methods to perform the rearrangement of aminal via aminobenzylaniline to MDA in several steps. Among these references, U.S. Pat. No. 4,039,581 describes using solid acids in a complex process including drying and rearrangement using zeolites at temperatures below 100°C. Unfortunately, a full rearrangement of the amino-benzylaniline intermediates to the MDA bases cannot be achieved at such temperatures.

EP-A-0 329 367 discloses the rearrangement of a dried aminal using zeolitic catalysts for the purpose of selective production of binuclear MDA. The aminal is rearranged isothermally using dealuminized HY zeolites and fluorinated derivatives thereof to produce a blend of MDAs.

Unfortunately, these and many other art-known methods suffer significant drawbacks in practice. Many are expensive, either due to initial cost of selected catalyst or because of short catalyst lifetimes. Some processes produce relatively poor yields and/or exhibit relatively poor selectivity for both the desired MDA isomer(s) and for the proportion of MDA monomer relative to MDA oligomers (MDA/oligomers). Still others processes require relatively high temperatures, which may be cost-prohibitive, increase impurities levels, and/or contribute to reduced catalyst lifetimes. Thus, there continues to be a need for methods of producing polyaminopolyphenyl methanes (PMDA) that overcome these drawbacks and produce high yields, improved selectivities for desired isomeric products, and have extended catalyst lifetimes.

### SUMMARY OF THE INVENTION

Accordingly, the present invention provides a method for preparing a polyaminopolyphenyl methane, comprising (1) preparing a non-aqueous aminal solution; (2) contacting the non-aqueous aminal solution and a solid acidic siliceous catalyst to form a benzylamine intermediate; (3) contacting the benzylamine intermediate and an ion exchange resin catalyst based on a styrene-divinylbenzene copolymer to form an aromatic polyamine reaction mixture containing a polyaminopolyphenyl methane product; and (4) recovering the polyaminopolyphenyl methane product from the aromatic polyamine reaction mixture.

### DETAILED DESCRIPTION OF THE INVENTION

Practice of the invention may, in one embodiment, be used to obtain a polyaminopolyphenyl methane having a selectivity of 4,4'-MDA above about 80 weight percent. In another embodiment, the method may be used to obtain a polyaminopolyphenyl methane having a selectivity of 4,4'-MDA above about 85 weight percent. In a further embodiment of the invention, the method gives an oligomer level in the range of from 5 to 50 weight percent; and a level of MDA-monoformamide, N-methyl MDA, or a combination thereof that is less than about 1 weight percent. In another embodiment, the method gives a level of MDA-monoformamide, N-methyl MDA, or a combination thereof of less than 0.5 weight percent. In yet other, the method gives a level of N-methyl MDA (MMM) impurities that is below about 0.25 weight percent. Significantly, the catalyst system may have an extended lifetime, therefore also improving the economics of producing such polyaminopolyphenyl methanes.

The process of the invention may typically begin with the art-known condensation reaction of aniline and formaldehyde, which is generally accepted as a relatively inexpensive and efficient way to produce a non-aqueous aminal solution that is essentially a mixture of aromatic polyamines. However, it thereafter improves upon known methods of preparing polyaminopolyphenyl methanes therefrom, by using a mixed, non-homogeneous solid acid catalyst system that avoids the need to neutralize the final acid-containing product with a strong base, such as sodium hydroxide.

The aniline, that may be used to prepare the non-aqueous aminal solution, may itself be prepared by, for example, reacting benzene with nitric acid and a catalyst, to form nitrobenzene. This nitrobenzene product is then reacted with hydrogen and a catalyst, to form aniline. The aniline is then ready to be reacted with formaldehyde in the aniline-formaldehyde condensation reaction.

This condensation reaction is well-known to those skilled in the art. Mole ratios of aniline to formaldehyde maybe varied, in some non-limiting embodiments, from 10:1 to 2.0:1. However, for a typical preparation, a ratio wherein aniline is in moderate excess, for example, about 4:1, is often convenient. In this preparation the aniline may be flowed into a suitable reactor and cooled to approximately 10°C. An aqueous solution of formaldehyde, alternatively termed formalin, which is about 37 percent by weight of formaldehyde in water, is then flowed into the reactor slowly, with stirring, and the mixture is allowed to react for a suitable period of time at a relatively low temperature. For example, in one embodiment the time is from 1 to 5 hours, and the temperature is below about 25°C. This mixture is then allowed to stand for a period of time, either in the reactor vessel under a nitrogen blanket or in a separator unit, until separation of the organic phase into a bottoms portion is complete. This organic fraction, which is the aminal, may then be separated from the remainder and stored at ambient temperature under a nitrogen blanket. The non-aqueous aminal may still contain a relatively small (less than 4 percent by weight) of water. Because this phase contains at least some water, the aminal may then be dried. Such drying may be accomplished using molecular sieves of various types, potassium hydroxide pellets, or other known means of removing substantially all water therefrom. The dried aminal is then described as being "non-aqueous."

The non-aqueous aminal is then ready for further processing in a step frequently termed as rearrangement. For this a series of two different catalysts is employed.

The first catalyst is a solid acidic siliceous catalyst. This catalyst serves to begin rearrangement of the aminal. For this purpose commercial catalysts containing silica may be used, such as silica-alumina, silica-magnesia, or combinations thereof. For example, there are a number of molecular sieve-based catalysts in this classification that may be useful, provided their pore sizes are not undesirably restrictive. In some non-limiting embodiments, useful catalysts include a silica-alumina catalyst containing from 5 to 30 percent by weight of alumina, such as DAVICAT™ SIAL 3111, DAVICAT™ SIAL 3113, DAVICAT™ SIAL 3125, GRACE™ 980-13, and GRACE™ 980-25, available from W.R. Grace & Co., and MSA, which is an amorphous mesoporous silica-alumina catalyst, available from EniTechnologie S.p.A.. In general mesoporous catalysts, with pore sizes from 20 Angstroms (Å) to 500 Å, may be especially useful to rearrange a relatively higher proportion of the aminal than would be rearranged using microporous catalysts.

This first catalyst serves to convert a relatively large proportion, or even substantially all, of the aminal into benzylamines. Such benzylamine intermediate may include some amount of para-aminobenzyl aniline (PABA), ortho-aminobenzyl aniline (OABA), higher molecular weight aminobenzyl anilines, or a combination thereof. The use of a solid acidic siliceous catalyst allows one to obtain greater than about 90 percent by weight rearrangement of the aminal to benzylamines at relatively low temperatures, generally less than or equal to about 100°C. In another embodiment the use of a solid acidic siliceous catalyst allows one to obtain greater than about 90 percent by weight rearrangement of the aminal to benzylamines at relatively low temperatures. The amount of time required for this portion of the rearrangement may also be relatively short in conjunction with relatively low temperatures. For example, in one embodiment, conversion of about 95 percent by weight of the aminal to benzylamines may be carried out at a temperature of from 45°C to 90°C, for a time ranging from 5 hours to 24 hours. In another embodiment, a temperature of from 60°C to 80°C may be used. In yet another embodiment, conversion of about 95 percent by weight of the aminal may be converted to benzylamines at a temperature of about 100°C, over a time ranging from 4 hours to 10 hours.

Following conversion of most, or substantially all, of the aminal to benzylamines, the benzylamine intermediate is then contacted with a second catalyst. This second catalyst is characterized as an ion exchange resin catalyst. In some embodiments this second catalyst is termed a "solid acid," but is, generally, in gelatinous form. That is, it is in the form of a gel that has been prepared by pre-wetting dry resin, and is further defined as being based on styrene-divinylbenzene copolymers. Examples of such ion exchange resins include, for example, DOWEX™ 50WX2, which is a gelatinous strong acid ion exchange resin prepared from a styrene-divinylbenzene copolymer containing about 2 percent by weight divinylbenzene, and further containing sulfonic acid groups, available from The Dow Chemical Company. In another embodiments, this second catalyst may be an ion exchange resin based on styrene-divinylbenzene copolymers containing from 2 to 20 percent by weight of divinylbenzene, and further contains sulfonic acid and/or alkyl sulfonic acid groups, such as methylsulfonic acid. An example of this type of catalyst is DOWEX™ MSC-1, which is a macroporous strong acid ion exchange resin prepared from a styrene-divinylbenzene copolymer containing about 18 percent by weight divinylbenzene and containing sulfonic acid groups, available from The Dow Chemical Company.

The benzylamine intermediate, which has previously been formed by means of contact of the aminal and the solid acidic siliceous catalyst, is now contacted with the ion exchange resin at a temperature ranging from 70°C to 130°C. Such may be carried out as part of a continuous process wherein each stage's material is flowed sequentially from a first to a second reactor. For example, this second reactor vessel may be, a plug-flow or continuous stirred tank reactor (CSTR). In other embodiments, a third vessel of the same or similar type may also be included in the production train. This three-vessel embodiment may be particularly efficacious where the latter two vessels are maintained at different temperatures, for example, a second vessel at from 70°C to 110°C, preferably from 80°C to 100°C, and a third vessel from 90°C to 130°C, preferably from 105°C to 120°C. In this case the same ion exchange resin may be employed in each of the latter two vessels, or different resins of the same description may be employed.

In the present invention, the ion exchange resin serves to convert (rearrange) the benzylamines in the benzylamine intermediate to the final polyaminopolyphenyl methanes. The result of this conversion is an aromatic polyamine reaction mixture which contains polyaminopolyphenyl methanes, including in particular 2,2'-, 2,4'- and 4,4'-diaminodiphenyl methane isomers, as well as higher condensation products containing from 3 to 6 aromatic rings. As is understood by those skilled in the art, distribution of these various components is generally affected by process parameters, including temperature, aniline/formaldehyde ratio. However, in some non-limiting embodiments, the present invention may also obtain reduced formation of undesirable by-products, such as N-methyl aniline, MDA-monoformamide (MDA-MFA), formanilide, and N-methyl MDA (MMM). Levels of less than about 1.0 percent by weight may be present, and, in some preferred embodiments, less than about 0.5 percent by weight. In particular, MMM may be present at a level below about 0.25 percent by weight. Furthermore, the selectivity for 4,4'-MDA may be, above about 80 percent by weight. In a futher embodiment, the the selectivity for 4,4'-MDA may be above about 85 percent by weight; In yet other embodiments, the selectivity for 4,4'-MDA may be above about 87 percent by weight. The oligomer level may range from 5 to 50 percent by weight.

The desired polylaminopolyphenyl methane product, frequently but not necessarily the 4,4'-MDA component, may be recovered from the aromatic polyamine reaction mixture by conventional means, such as by filtration, distillation, evaporation, stripping, combinations thereof, etc. The recovered polyaminopolyphenyl methane product may then be used to produce a polymeric methylene diisocyanate (PMDI) product by reaction with phospgene or conversion to isocyanate by non-phosgene routes. Isocyanates produced from the polylaminopolyphenyl methane products of the present invention generally have reduced levels of chlorine-containing compounds, in comparison with PMDI prepared using the product of some other polyaminopolyphenyl methane processes. Reduced levels of such chlorine-containing compounds may help to avoid later problems when the PMDI is used for preparing other products, such as polyurethanes.

The description hereinabove is intended to be general and is not intended to be inclusive of all possible embodiments of the invention. Similarly, the examples hereinbelow are provided to be illustrative only and are not intended to define or limit the invention in any way. Those skilled in the art will be fully aware that other embodiments, within the scope of the claims, will be apparent, from consideration of the specification and/or practice of the invention as disclosed herein. Such other embodiments may include selections of specific catalysts; mixing and reaction conditions, vessels, and protocols; performance and selectivity; identification of products and by-products; subsequent processing and use thereof; and the like; and those skilled in the art will recognize that such may be varied within the scope of the claims appended hereto.

### EXAMPLES

### Materials:

The ion exchange resin is a gelatinous strong acid ion exchange resin designated as DOWEX™ 50WX2, 50-100 mesh (U.S. Standard), prepared from styrene-divinylbenzene copolymers containing divinylbenzene in an amount of about 2 percent by weight and further containing sulfonic acid groups, available from The Dow Chemical Company.

The silica-alumina catalysts are designated as DAVICAT™ 3113 and GRACE™ 980-15, obtained from W.R. Grace & Co.

The aminal solutions used as a feed (both continuous and batch) are prepared from the condensation of aniline and formalin (37 percent formaldehyde by weight, in water), at aniline/formaldehyde mole ratios of 4.0:1 and 2.5:1, at 25°C for about 3 hours under a nitrogen pad. The aminal solution is the separated organics bottoms fraction.

### Equipment:

The continuous system consists of a plug flow reactor (1 inch by 12 inch stainless steel pipe with four band heaters) and two CSTR reactors, which are 300 mL Parr reactors. The aminal feed is pumped over the reactors by a Gilson piston pump. Samples are collected at time intervals by an automatic fraction collector.

The batch system consists of a 300 mL Parr 4566 mini-reactor with a band heater and agitator (two 45-degree slant blades), and a Parr 4842 controller for temperature and agitation control.

The reactors are filled with the desired amount of catalyst and heated to about 60°C, while an inert gas (nitrogen) is flowed through for at least 3 hours. The flow of inert gas is then shut off and methanol is pumped through the system at a flow rate of about 2 mL/min to displace water in the resin at 60°C. The feed is then switched to the aminal solution with a desired flow rate (0.5 mL/min), and the reactor temperature is then raised to the desired reaction temperature.

The effluent from the reactor system is collected and analyzed by gas chromatography (GC) for aniline, MDA isomers, unrearranged benzylamines (PABA and OABA), and major by-products such as N-methyl aniline, N-methyl MDA (MMM), formanilide, and MDA-monoformamide (MDA-MFA). MDA and oligomer distribution is obtained from a gel permeation chromatography (GPC) analysis.

### Example 1 (Comparative)

The first plug flow reactor is filled with about 160 g of water-wet DOWEX™ 50WX2, and the second and third reactors (which are both CSTRs) are filled with about 150 g of water-wet DOWEX™ 50WX2. An aniline to formaldehyde ratio of 4.0:1 is employed to produce the initial aminal solution. Flow rate is 0.5 mL/min, and the reaction is carried out in the first (plug-flow) reactor at about 65°C; in the second reactor (CSTR #1) at about 85°C; and in the third reactor (CSTR #2) at about 115°C.

After about 1 week, deactivation of catalyst is observed, along with a significant rate of decrease in MDA formation and an increase in PABA, particularly in the plug flow reactor and in CSTR #1. Also observed is a decrease in 4,4'-MDA in both CSTR reactors, and significant increases in impurities are observed for all three reactors.

### Example 2

The first plug flow reactor is filled with about 85 g of silica-alumina catalyst (extrudate made from DAVICAT™ SIAL 3113), and the second and third reactors (CSTR #1 and CSTR #2, respectively) are filled with about 200 g each of water-wet DOWEX™ 50WX2. The same aminal solution as used in Example 1 (prepared from aniline and formaldehyde in a 4.0:1 ratio) is employed, at a flow rate of 0.5 mL/min. Temperature in the plug flow reactor is about 70°C; in CSTR #1 it is about 90°C; and in CSTR #2 it is about 115°C.

Analysis reveals that the deactivation rate of the DOWEX™ 50WX2 catalyst in CSTR #1 and CSTR #2 is much slower than that observed in Example 1 (Comparative). There is also a reduced level of impurities in comparison with Example 1 (Comparative), and therefore the product of Example 2 is of better quality. In this Example, the continuous system is used to study catalyst lifetime, and therefore complete conversion is not attempted. Batch reactions are performed as shown in the following examples, therefore, to confirm the final product properties.

### Example 3 (Comparative)

The 300 mL Parr 4566 mini-reactor with Parr 4842 controller is used in this example for a batch reaction. About 75 g of the same aminal solution (prepared using an aniline to formaldehyde ratio of 4.0:1) as used in previous examples is placed into the Parr 4566, along with about 68 mL of water-wet DOWEX™ 50WX2 (containing 8.28 g dry weight). The system is swept with a slow stream of nitrogen and the temperature (the first stage) is raised to about 60°C and maintained there for 24 hours, and then raised to about 85°C (the second stage) for 12 hours. Samples taken after the second stage show that more than about 99 percent of the PABA has completed rearrangement to MDA. The temperature is then raised to 120°C (the third stage) for 4 hours, after which essentially all OABA has rearranged to MDA.

Final product properties are analyzed and found to contain about 83.5 percent by weight monomeric MDA and about 16.5 percent by weight MDA oligomers. Of the monomeric MDA, 86.7 percent by weight is 4,4'-MDA; 12.43 percent by weight is 2,4'-MDA; and 0.87 percent by weight is 2,2'-MDA.

### Example 4 (Comparative)

The experiment of Example 3 (Comparative) is repeated, except that the starting aminal solution is prepared using an aniline to formaldehyde ratio of 2.5:1. The results are shown in Table 1. The lower aniline to formaldehyde ratio, when compared with that used in Example 3 (Comparative), results in a product containing higher levels of both oligomers and 4,4'-MDA isomer.

### Example 5

In this batch example the aminal solution (prepared using an aniline to formaldehyde ratio of 4.0:1) is first treated with a silica-alumina catalyst (extrudate made from DAVICAT™ SIAL 3113) at 60°C for 6 hours. After removing the catalyst via filtration, the filtrate is reacted with water-wet DOWEX™ 50WX2 under the same conditions as in Example 3 (Comparative). The results are shown in Table 1. While the MDA/oligomer distribution is similar to that in Example 3 (Comparative), there is an increase in the proportion of 4,4'-MDA.

### Example 6

The procedures of Example 5 are employed, except that the aminal solution is based on an aniline/formaldehyde ratio of 2.5:1, and treatment with the silica-alumina catalyst is carried out for 10 hours. After removing the catalyst, the filtrate is reacted with the water-wet DOWEX™ 50WX2 under the same conditions as in Example 4 (Comparative). The results are shown in Table 1. Again, an increase in the proportion of 4,4'-MDA is observed, but the MDA/oligomer distribution is similar to that of Example 4 (Comparative).

**Table 1**

| | **Example 3 (Comparative)** | **Example 5** | **Example 4 (Comparative)** | **Example 6** |
|---|---|---|---|---|
| **A**/**F ratio** | 4 | 4 | 2.5 | 2.5 |
| **Catalyst** | (DOWEX™ only) | DOWEX™ + SiAl, 60°C/6hr | (DOWEX™ only) | DOWEX™ + SiAl, 60°C/10hr |
| **-- first stage** | 60°C/24 hr | 60°C/24 hr | 60°C/24hr | 60°C/24 hr |
| **-- second stage** | 85°C/12 hr | 85°C/12 hr | 85°C/12 hr | 85°C/12 hr |
| -- **third stage** | 120°C/4 hr | 120°C/4 hr | 120°C/4 hr | 120°C/4 hr |
| . . . . . . . . . . | . . . . . . . . . . | . . . . . . . . . . | . . . . . . . . . . | . . . . . . . . . . |
| **MDA Isomer ratio** | | | | |
| **p,p'-MDA** | 86.70 | 87.27 | 89.67 | 90.44 |
| **o,p'-MDA** | 12.43 | 12.00 | 9.82 | 9.19 |
| **o,o'-MDA** | 0.87 | 0.73 | 0.52 | 0.37 |
| . . . . . . . . . . | . . . . . . . . . . | . . . . . . . . . . | . . . . . . . . . . | . . . . . . . . . . |
| **MDA/Oligomer** | | | | |
| **MDA** | 83.46 | 82.06 | 68.12 | 66.89 |
| **Trimer** | 14.28 | 15.23 | 23.52 | 23.77 |
| **Tetramer** | 2.26 | 2.72 | 6.34 | 7.06 |
| **Pentamer** | n/a | n/a | 2.00 | 2.28 |
| . . . . . . . . . . | . . . . . . . . . . | . . . . . . . . . . | . . . . . . . . . . | . . . . . . . . . . |
| **Percent OABA in mixture** | 0.024 | 0.024 | 0.02 | 0.007 |
| **Percent MMM in mixture** | 0.132 | 0.035 | 0.249 | 0.139 |

## Claims

1. A method for preparing a polyaminopolyphenyl methane, comprising
(1) preparing a non-aqueous aminal solution;
(2) contacting the non-aqueous aminal solution and a solid acidic siliceous catalyst to form a benzylamine intermediate;
(3) contacting the benzylamine intermediate and an ion exchange resin catalyst based on a styrene-divinylbenzene copolymer to form an aromatic polyamine reaction mixture containing a polyaminopolyphenyl methane product; and
(4) recovering the polyaminopolyphenyl methane product from the aromatic polyamine reaction mixture.

2. The method of claim 1 wherein the polyaminopolyphenyl methane product is monomeric methylene dianiline, of which at least about 80 percent by weight is the 4,4'-methylene dianiline isomer.

3. The method of claim 2 wherein at least about 85 percent by weight is the 4,4'-methylene dianiline isomer.

4. The method of claim 1 wherein step (1) is carried out using an aniline to formaldehyde ratio of from 10:1 to 1.8:1.

5. The method of claim 1 wherein the solid acidic siliceous catalyst is selected from the group consisting of a silica-alumina catalyst, a silica-magnesia catalyst, and combinations thereof.

6. The method of claim 5 wherein the silica-alumina catalyst contains from 5 percent to 30 percent by weight alumina.

7. The method of claim 1 wherein the solid acidic siliceous catalyst is a mesoporous molecular sieve having pore sizes ranging from 20 Angstroms to 500 Angstroms.

8. The method of claim 1 wherein the benzylamine intermediate contains at least one compound selected from the group consisting of para-aminobenzyl aniline, ortho-aminobenzyl aniline, higher molecular weight aminobenzyl anilines, and combinations thereof.

9. The method of claim 1 wherein step (2) is carried out at a temperature of from 45°C to 90°C.

10. The method of claim 1 wherein the ion exchange resin catalyst contains moieties selected from the group consisting of sulfonic acid groups, alkyl sulfonic acid groups, and combinations thereof.

11. The method of claim 1 wherein the ion exchange resin catalyst is gelatinous.

12. The method of claim 1 where the ion exchange resin catalyst includes at least about 2 weight percent divinylbenzene.

13. The method of claim 1 wherein step (3) is carried out at a temperature of from 70°C to 130°C.

14. The method of claim 1 wherein the aromatic polyamine reaction mixture contains MDA oligomers in an amount from 5 to 50 percent by weight.

15. The method of claim 1 wherein the aromatic polyamine reaction mixture contains less than about 1.0 percent by weight of MDA-monoformamide, N-methyl MDA, or a combination thereof.

## Patentansprüche

1. Ein Verfahren zur Herstellung eines Polyaminopolyphenylmethans, das Folgendes beinhaltet:
(1) Herstellen einer nicht wässrigen Aminallösung;
(2) In-Kontakt-Bringen der nicht wässrigen Aminallösung und eines festen sauren kieselsäurehaltigen Katalysators, um ein Benzylamin-Zwischenprodukt zu bilden;
(3) In-Kontakt-Bringen des Benzylamin-Zwischenprodukts und eines lonenaustauschharz-Katalysators, auf Basis eines Styrol-Divinylbenzol-Copolymers, um ein aromatisches Polyamin-Reaktionsgemisch zu bilden, das ein Polyaminopolyphenylmethan-Produkt enthält; und
(4) Gewinnen des Polyaminopolyphenylmethan-Produkts aus dem aromatischen Polyamin-Reaktionsgemisch.

2. Verfahren gemäß Anspruch 1, wobei das Polyaminopolyphenylmethan-Produkt monomeres Methylendianilin ist, wovon mindestens etwa 80 Gewichtsprozent das 4,4'-Methylendianilinisomer sind.

3. Verfahren gemäß Anspruch 2, wobei mindestens etwa 85 Gewichtsprozent das 4,4'-Methylendianilinisomer sind.

4. Verfahren gemäß Anspruch 1, wobei Schritt (1) unter Verwendung eines Verhältnisses von Anilin zu Formaldehyd von 10 : 1 bis 1,8 : 1 durchgeführt wird.

5. Verfahren gemäß Anspruch 1, wobei der feste saure kieselsäurehaltige Katalysator aus der Gruppe ausgewählt ist, die aus einem Siliciumdioxid-Aluminiumoxid-Katalysator, einem Siliciumdioxid-Magnesiumoxid-Katalysator und Kombinationen davon besteht.

6. Verfahren gemäß Anspruch 5, wobei der Siliciumdioxid-Aluminiumoxid-Katalysator zu 5 bis 30 Gewichtsprozent Aluminiumoxid enthält.

7. Verfahren gemäß Anspruch 1, wobei der feste saure kieselsäurehaltige Katalysator ein mesoporöses Molekularsieb mit Porengrößen in dem Bereich von 20 Ångström bis 500 Ångström ist.

8. Verfahren gemäß Anspruch 1, wobei das Benzylamin-Zwischenprodukt mindestens eine Verbindung enthält, die aus der Gruppe ausgewählt ist, die aus para-Aminobenzylanilin, ortho-Aminobenzylanilin, Aminobenzylanilinen mit höherem Molekulargewicht und Kombinationen davon besteht.

9. Verfahren gemäß Anspruch 1, wobei Schritt (2) bei einer Temperatur von 45 °C bis 90 °C durchgeführt wird.

10. Verfahren gemäß Anspruch 1, wobei der Ionenaustauschharz-Katalysator Anteile enthält, die aus der Gruppe ausgewählt sind, die aus Sulfonsäuregruppen, Alkylsulfonsäuregruppen und Kombinationen davon besteht.

11. Verfahren gemäß Anspruch 1, wobei der Ionenaustauschharz-Katalysator gelartig ist.

12. Verfahren gemäß Anspruch 1, wobei der Ionenaustauschharz-Katalysator zu mindestens etwa 2 Gewichtsprozent Divinylbenzol umfasst.

13. Verfahren gemäß Anspruch 1, wobei Schritt (3) bei einer Temperatur von 70 °C bis 130 °C durchgeführt wird.

14. Verfahren gemäß Anspruch 1, wobei das aromatische Polyamin-Reaktionsgemisch MDA-Oligomere in einer Menge von 5 bis 50 Gewichtsprozent enthält.

15. Verfahren gemäß Anspruch 1, wobei das aromatische Polyamin-Reaktionsgemisch weniger als etwa 1,0 Gewichtsprozent MDA-Monoformamid, N-Methyl-MDA oder eine Kombination davon enthält.

## Revendications

1. Une méthode pour préparer un polyaminopolyphényl méthane, comprenant
(1) la préparation d'une solution aminal non aqueuse ;
(2) la mise en contact de la solution aminal non aqueuse et d'un catalyseur siliceux acide solide afin de former un intermédiaire benzylamine ;
(3) la mise en contact de l'intermédiaire benzylamine et d'un catalyseur de type résine échangeuse d'ions sur la base d'un copolymère styrène-divinylbenzène afin de former un mélange réactionnel polyamine aromatique contenant un produit polyaminopolyphényl méthane ; et
(4) la récupération du produit polyaminopolyphényl méthane du mélange réactionnel polyamine aromatique.

2. La méthode de la revendication 1 dans laquelle le produit polyaminopolyphényl méthane est la méthylène dianiline monomère, dont au moins environ 80 pour cent en poids est de l'isomère de 4,4'-méthylène dianiline.

3. La méthode de la revendication 2 dans laquelle au moins environ 85 pour cent en poids est de l'isomère de 4,4'-méthylène dianiline.

4. La méthode de la revendication 1 dans laquelle l'étape (1) est effectuée en utilisant un rapport d'aniline au formaldéhyde allant de 10/1 à 1,8/1.

5. La méthode de la revendication 1 dans laquelle le catalyseur siliceux acide solide est sélectionné dans le groupe constitué d'un catalyseur silice-alumine, d'un catalyseur silice-magnésie, et de combinaisons de ceux-ci.

6. La méthode de la revendication 5 dans laquelle le catalyseur silice-alumine contient de 5 pour cent à 30 pour cent en poids d'alumine.

7. La méthode de la revendication 1 dans laquelle le catalyseur siliceux acide solide est un tamis moléculaire mésoporeux ayant des tailles de pore comprises dans la plage allant de 20 angströms à 500 angströms.

8. La méthode de la revendication 1 dans laquelle l'intermédiaire benzylamine contient au moins un composé sélectionné dans le groupe constitué d'aniline para-aminobenzyle, d'aniline ortho-aminobenzyle, d'anilines aminobenzyle de masse moléculaire plus élevée, et de combinaisons de celles-ci.

9. La méthode de la revendication 1 dans laquelle l'étape (2) est effectuée à une température allant de 45 °C à 90 °C.

10. La méthode de la revendication 1 dans laquelle le catalyseur de type résine échangeuse d'ions contient des groupements sélectionnés dans le groupe constitué de groupes d'acide sulfonique, de groupes d'acide alkylsulfonique, et de combinaisons de ceux-ci.

11. La méthode de la revendication 1 dans laquelle le catalyseur de type résine échangeuse d'ions est gélatineux.

12. La méthode de la revendication 1 où le catalyseur de type résine échangeuse d'ions inclut au moins environ 2 pour cent en poids de divinylbenzène.

13. La méthode de la revendication 1 dans laquelle l'étape (3) est effectuée à une température allant de 70 °C à 130 °C.

14. La méthode de la revendication 1 dans laquelle le mélange réactionnel polyamine aromatique contient des oligomères MDA en une quantité de 5 à 50 pour cent en poids.

15. La méthode de la revendication 1 dans laquelle le mélange réactionnel polyamine aromatique contient moins d'environ 1,0 pour cent en poids de MDA-monoformamide, de N-méthyl MDA, ou une combinaison de ceux-ci.
